# EUROPEAN PATENT APPLICATION

(11) **EP 4 607 321 A1**
(43) Date of publication of application: **27.08.2025**
(21) Application number: 23879655.1
(22) Date of filing: 06.10.2023
(51) Int. Cl.: G06F 3/01, B25J 5/00, B25J 13/00, G05D 1/43, H04R 1/00, H04R 3/00

(54) **WALKING SPEED CONTROL SYSTEM AND PROGRAM**

(30) Priority: 17.10.2022 JP 2022166242; 02.11.2022 JP 2022176626; 17.11.2022 JP 2022184307
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/036634
(87) International publication number: WO 2024/085011

(57) **Abstract**

A humanoid robot automatically measures an average walking speed of human workers using a group of sensors. The humanoid robot is moved at a speed equivalent to the measured walking speed. The moving speeds in the entire working environment can be synchronized (first-stage synchronization). A speaker plays a rhythm that can be heard by both the human workers and the humanoid robots at the same time. By playing this rhythmic music on a floor, all of the human workers and the humanoid robots are synchronized to the same rhythm (second-stage synchronization). If the music is played at 1.2x speed 1.2 to the walking speed A (A×1.2) of the human workers, the entire flow of movement can be synchronized to a 1.2 times faster rhythm with fewer accidents (e.g., contacts, collisions, etc.) (third-stage synchronization).

## Description

### Technical Field

The present disclosure relates to a walking speed control system and a program.

### Background Art

Typically, during picking work in a warehouse, manufacturing (component assembly) and packing work in a factory, or the like (hereinafter, referred to as picking work or the like), workers performs the work at different speeds.

The average walking speed of the workers for the picking work or the like in the warehouse varies depending on the work base including country and region, the company provided located at the work base, the facility such as warehouse, the floor of the facility, and the work time zone (date and time) (hereinafter, collectively referred to as the work environment).

This is because the average height of workers on the specific floor and how busy the workers are depending on the work time zone vary, which causes the average time required for the picking work to vary.

In such a work environment, robots that are automatically controlled may be introduced, and the robots are mixed with workers (human workers) and move to play the respective roles.

For example, Japanese Patent Application Laid-Open (JP-A) No. 2019-093506 describes that a posture of a humanoid robot is controlled to automatically perform work in a production line of a factory.

### SUMMARY OF INVENTION

### Technical Problem

However, when human workers and robots are mixed in an area of the same work environment, confusion occurs between the movements, including the movements of the human workers. In addition, in a work environment in which there are only robots and no human workers, in a case in which a plurality of types of robots having different moving speeds are mixed, confusion also occurs between the movements of all the robots.

The disclosure has been made in view of the above circumstances, and an object of the disclosure is to provide a walking speed control system and a program capable of synchronizing all movements in an area of a work environment including at least robots in which work execution information is programmed in advance to suppress confusion between the movements.

### Solution to Problem

A walking speed control system according to the disclosure is a walking speed control system in a case in which work staff, in which human workers and robots are mixed, moves within a predetermined area to perform work, the walking speed control system including: a detection unit that detects the human workers; a calculation unit that calculates moving speeds of the plurality of human workers detected by the detection unit; and a setting unit that sets a moving speed in synchronization with an average value of the moving speeds calculated by the calculation unit.

According to the disclosure, interference (contacts and collisions) between the human workers and the robots can be avoided by moving the robots in synchronization with (the average value of) the moving speeds of the human workers.

As a result, in a work environment including at least robots in which work execution information is programmed in advance, all the movements in an area of the work environment can be synchronized, thereby suppressing confusion between the movements.

In the disclosure, the walking speed control system further includes: a speaker installed in the predetermined area; and a control unit that outputs music from the speaker based on music information played with a predetermined rhythm.

As the human workers perform the work in synchronization with the rhythm of the music, the work can be performed with a consistent motion (at a consistent moving speed) in the entire predetermined area.

In the disclosure, the control unit outputs the music based on the music information at a speed faster than a normal speed.

If the tempos of the human workers are synchronized with each other, the overall moving speed of the human workers can be increased, improving efficiency.

In addition, in a case in which there are only robots in the predetermined area, the moving speed can be further increased as compared with that in a case in which the robots are mixed with human workers. In this case, even if there are a plurality of types of robots controlled by different programs, interference between the robots can be avoided by moving the robots in synchronization with the same rhythm.

A program according to the disclosure causes a computer to function as the detection unit, the calculation unit, and the setting unit of the walking speed control system described above.

A walking speed control system according to the disclosure is a walking speed control system that controls moving speeds of at least a plurality of robots in a case in which the plurality of robots move in a predetermined area to perform work, the walking speed control system including: a synchronization control unit that causes each of the plurality of robots to move at a first moving speed synchronized to a tempo and a rhythm of music information collected by a sound collection device included in each of the plurality of robots; and an adjustment unit that, in a case in which a human worker who that performs the work is detected in the predetermined area, calculates a second moving speed of the human worker who moves in synchronization with the music information, and adjusts the first moving speed for the synchronization control unit to synchronize the plurality of robots based on the calculated second moving speed.

According to the disclosure, the plurality of robots are normally synchronized to the music information played in the predetermined area (floor or the like), but when a human worker enters the predetermined area, the plurality of robots move in accordance with a moving speed of the human worker synchronized to the music.

As a result, in a work environment including at least robots in which work execution information is programmed in advance, all the movements in an area of the work environment can be synchronized, thereby suppressing confusion between the movements.

In the disclosure, the music information is output at a tempo faster than a normal tempo set for a basic piece of the music information.

In order to improve work efficiency, the tempo of the music information is increased by, for example, 1.2 times. If the tempos and the rhythms of the human workers are synchronized with each other, the overall moving speed of the human workers can be increased, improving efficiency.

In the disclosure, the synchronization control unit adjusts a cycle of the first moving speed for the plurality of robots to move synchronously to be 1/integer of a cycle of the second moving speed.

The robots are capable of moving at a high speed therebetween. Even when the robots coexist with human workers, if their tempo cycles coincide with each other, interference is small, for example, even in a case in which the moving speed (work speed) of the robots: the moving speed (work speed) of the humans = 10:1.

In addition, in a case in which there are only robots in the predetermined area, the moving speed can be further increased as compared with that in a case in which the robots are mixed with human workers. In this case, even if there are a plurality of types of robots controlled by different programs, interference between the robots can be avoided by moving the robots in synchronization with the same tempo and rhythm.

A program according to the disclosure causes a computer to function as the synchronization control unit and the adjustment unit of the walking speed control system described above.

A walking speed control system according to the disclosure is a walking speed control system in a case in which work staff, in which human workers and robots are mixed, moves within a predetermined area to perform work, the walking speed control system including: at least one robot including a detection unit that detects the human workers, a calculation unit that calculates an average value of moving speeds of the plurality of human workers detected by the detection unit, and a setting unit that sets a moving speed for the at least one robot to move in synchronization with the average value of the moving speeds calculated by the calculation unit; a speaker installed in the predetermined area; a music control unit that outputs music having a constant rhythm at a preset tempo from the speaker; and a timing providing unit that provides a timing to the human workers by blinking or vibrating at the same tempo as the tempo of the music output from the speaker.

According to the disclosure, as the human workers perform the work in synchronization with the rhythm of the music, the work can be performed with a consistent motion (at a consistent moving speed) in the entire predetermined area, and even a human worker have poorer hearing ability than the other human workers is able to make a motion synchronized with the tempo of the music.

Furthermore, in the disclosure, the timing providing unit may be a light emitting device that provides a visual timing to the human workers by blinking at the same tempo as the tempo of the music output from the speaker.

Furthermore, in the disclosure, the timing providing unit may be a vibration device that provides a tactile timing to the human workers by vibrating at the same tempo as the tempo of the music output from the speaker.

Furthermore, in the disclosure, the walking speed control system may further include an operation control unit that detects a hearing ability of each of the human workers and provides the timing from the timing providing unit only to a human worker whose detected hearing ability is equal to or less than a preset value.

By doing so, it is possible to provide the tempo using a means other than music only to the human worker whose hearing ability is equal to or less than the preset value.

Furthermore, in the disclosure, the walking speed control system may further include an image capturing unit that captures an image including the plurality of human workers, in which the operation control unit sequentially outputs sounds calling a name of each of the human workers from the speaker in a stepwise increasing volume, and detects a hearing ability of the human worker depending on which output sound the human worker whose name has been called reacts.

Furthermore, a program according to the disclosure causes a computer to function as the detection unit, the calculation unit, the setting unit, the music control unit, and the timing providing unit of the walking speed control system described above.

### BRIEF DESCRIPTION OF DRAWINGS

Fig. 1 is a plan view of a floor in a warehouse where picking work is performed according to a first embodiment.
Fig. 2 is a front view of a humanoid robot according to the first embodiment.
Fig. 3 is a diagram schematically illustrating an example of a functional configuration of the humanoid robot.
Fig. 4 is a flowchart illustrating a work execution control routine on a humanoid robot side when human workers and humanoid robots are mixed, which is executed by a walking speed control system according to the first embodiment (first-stage synchronization).
Fig. 5 is a flowchart illustrating a control routine on a management control device side when human workers and humanoid robots are mixed, which is executed by the walking speed control system according to the first embodiment (second-stage synchronization).
Fig. 6 is a flowchart illustrating a control routine on the management control device side when human workers and humanoid robots are mixed, which is executed by the walking speed control system according to the first embodiment (third-stage synchronization).
Fig. 7 is a plan view of a floor in a warehouse where picking work is performed according to a second embodiment.
Fig. 8A is a flowchart illustrating a control routine executed by a management control device according to the second embodiment.
Fig. 8B is a flowchart illustrating a work execution control routine executed by a humanoid robot according to the second embodiment.
Fig. 9 is a flowchart illustrating a work execution control routine on a humanoid robot side, which is executed by a walking speed control system according to a third embodiment.
Fig. 10 is a flowchart illustrating a control routine on a management control device side, which is executed by the walking speed control system according to the third embodiment.
Fig. 11 is a flowchart illustrating a modification of the control routine on the management control device side, which is executed by the walking speed control system according to the third embodiment.
Fig. 12A is a flowchart illustrating a control routine executed by a management control device according to a fourth embodiment.
Fig. 12B is a flowchart illustrating a work execution control routine executed by a humanoid robot according to the fourth embodiment.
Fig. 13 is a plan view of a floor in a warehouse where picking work is performed according to a fifth embodiment.
Fig. 14 is a diagram illustrating a view of a human worker wearing a smart watch.
Fig. 15 is a diagram for explaining a detailed configuration of the smartwatch.
Fig. 16 is a diagram schematically illustrating an example of computer hardware functioning as an information processing device of a humanoid robot according to any one of the first to fifth embodiments.
Fig. 17 is an example according to the second or fourth embodiment, and is a flowchart for synchronizing a plurality of application actions.

### DESCRIPTION OF EMBODIMENTS

Hereinafter, the disclosure will be described through embodiments of the invention, but the following embodiments do not limit the invention according to the claims. In addition, not all combinations of features described in the embodiments are essential to the solution of the invention.

### (First Embodiment)

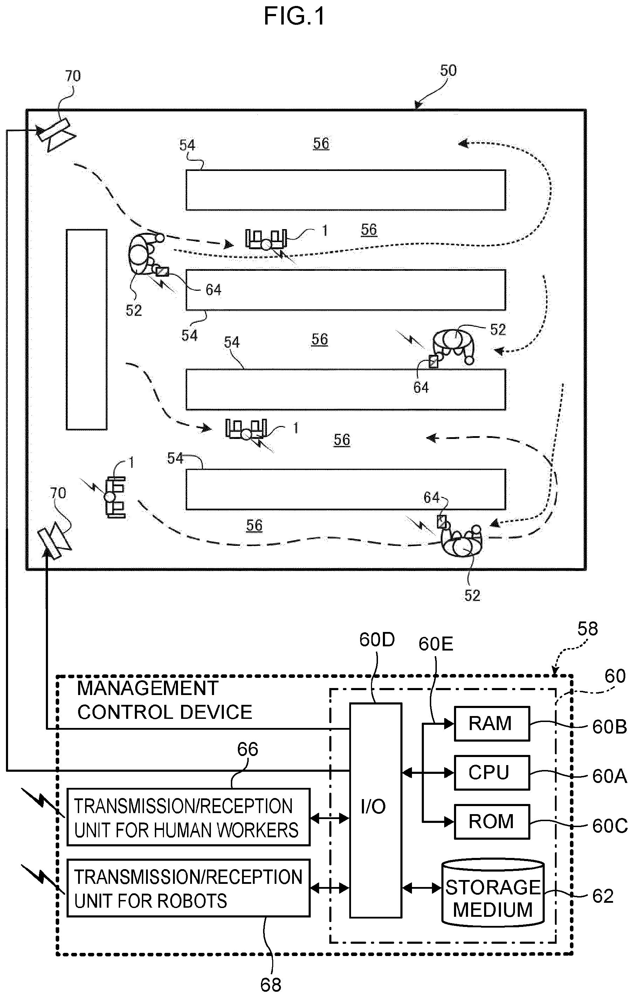

Fig. 1 is a plan view of a floor 50 in a warehouse where picking work is performed according to the first embodiment.

The picking work is work of collecting (picking up) necessary items. Picking staff members (including human workers 52 and humanoid robots 1) are deployed in warehouses of all kinds, because they play an essential role in shipping items in the warehouses.

For example, a main job of the picking staff is to collect designated items based on a list or an order instructed in advance and then deliver the collected items to inspectors or packers. The larger size the warehouse has, the larger the number of item types and the number of items stored in the warehouse. Therefore, a large number of picking staff members moves in the floor 50.

A plurality of shelves 54 are installed on the floor 50 illustrated in Fig. 1, and a space between the shelves 54 and a space between the floor 50 and the shelves 54 are movement passageways 56 for the picking staff.

The human workers 52 and the humanoid robots 1 are mixed as the picking staff members working on the floor 50.

The work (the movement in the floor 50) of the picking staff is managed by a management control device 58 that manages the floor 50. The management control device 58 functions as a control unit of the disclosure.

As illustrated in Fig. 1, the management control device 58 includes a microcomputer 60. The microcomputer 60 includes a central processing unit (CPU) 60A, a random access memory (RAM) 60B, a read only memory (ROM) 60C, an input/output unit (I/O) 60D, and a bus 60E such as a data bus or a control bus that connects them. A storage medium 62 is connected to the I/O 60D.

The I/O 60D is connected with a transmission/reception unit 66 for human workers that transmits and receives work information to and from mobile terminals 64 possessed by the human workers 52, and a transmission/reception unit 68 for robots that transmits and receives operation control information including work information to and from control systems of the humanoid robots 1.

Further, a speaker 70 is connected to the I/O 60D (to be described in detail later).

The human workers 52 receives list or order information from the management control device 58 that manages the floor 50 through the mobile terminals 64, move on the movement passageways 56 according to the received information, and pick up target items.

In addition, the humanoid robots 1 receives list or order information through the control systems mounted on the humanoid robots 1, move on the movement passageways 56 according to the received information, and pick up target items.

### (Humanoid Robot 1)

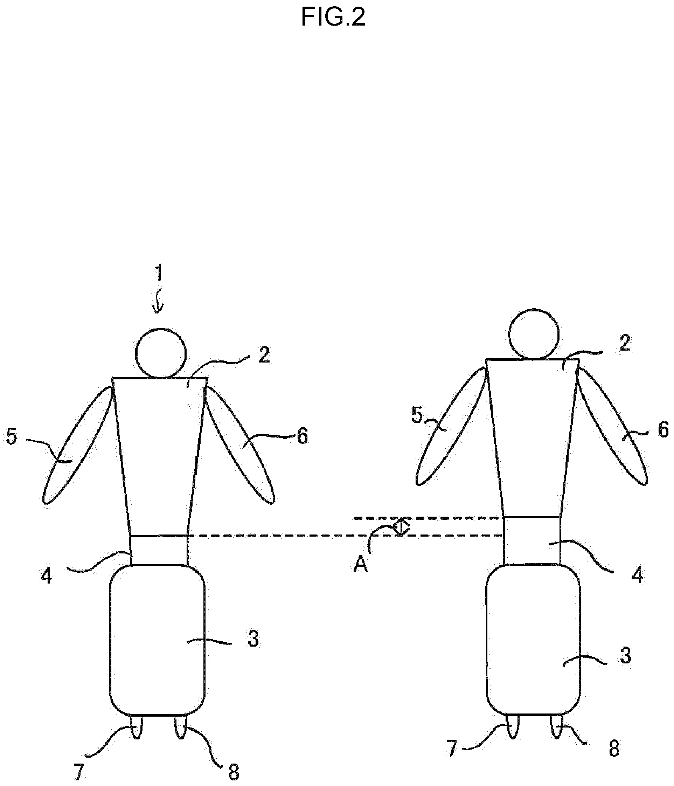

As illustrated in Fig. 2, the humanoid robot 1 includes an upper body portion 2, a leg portion 3, and a connecting portion 4 that pivotably the upper body portion 2 to the leg portion 3, and is programmed to perform picking work on the floor 50.

The upper body portion 2 includes two arm portions 5 and 6. The arm portions 5 and 6 are pivotably attached to the left and right of the upper body portion 2. A gripping portion (not illustrated) for gripping an object is attached to the distal end of each of the arm portions 5 and 6. Note that the number of arm portions is not limited to two, and may be one or three or more.

The leg portion 3 includes two wheels 7 and 8 attached to a lower side thereof, and is movable on a floor on which the humanoid robot 1 is disposed.

The connecting portion 4 pivotably connects the upper body portion 2 and the leg portion 3. Therefore, the upper body portion 2 can be tilted forward and backward with respect to the leg portion 3.

Furthermore, as illustrated in Fig. 2, the connecting portion 4 has a function of changing a distance between the upper body portion 2 and the leg portion 3. Therefore, the position of the upper body portion 2 in the vertical direction with respect to the leg portion 3 can be adjusted as indicated by arrow A to match a height of a workbench in a production line.

The driving of the humanoid robot 1 according to the present embodiment is controlled by a control system 10 mounted in the humanoid robot 1.

### (Schematic Configuration of Humanoid Robot 1)

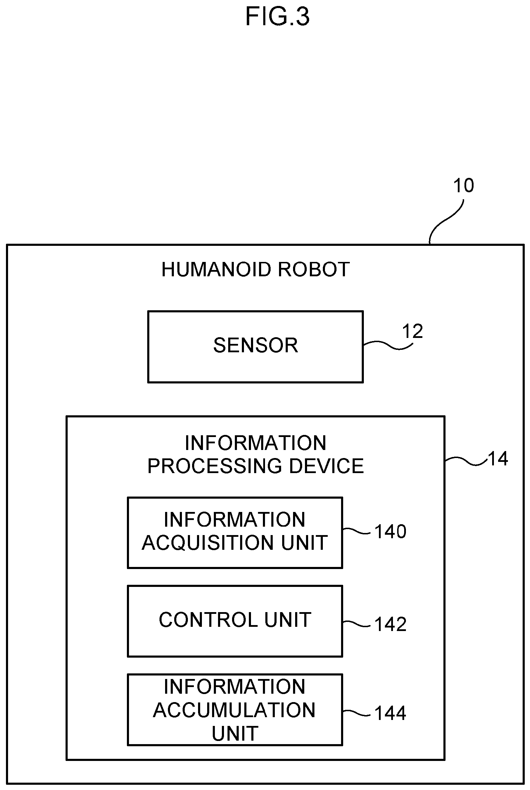

Fig. 3 is a schematic diagram of an example of a control system of the humanoid robot 1. The control system 10 includes a sensor 12 mounted on the humanoid robot 1 and an information processing device 14.

The sensor 12 functions as a detection unit according to the disclosure and detects the human workers 52. Further, the sensor 12 sequentially acquires information indicating at least a distance and an angle between an object on which a humanoid robot 1 located around the humanoid robot 1 works and an arm portion 5 or 6. As the sensor 12, a highest-performance camera, a solid-state LiDAR, a multi-color laser coaxial displacement meter, or any of the various other sensor groups can be adopted. Other examples of the sensor 12 include a vibration meter, a thermo camera, a hardness meter, a radar, a LiDAR, a high-pixel, telephoto, ultra-wide angle, 360-degree, high-performance camera, vision recognition, micro-sound, ultrasonic waves, vibration, infrared rays, ultraviolet rays, electromagnetic waves, temperature, humidity, spot AI weather forecasts, high-precision multi-channel GPS, low-altitude satellite information, long-tail incident AI data, and the like.

In addition to the above-described information, the sensor 12 detects images, distances, vibrations, heats, smells, colors, sounds, ultrasonic waves, ultraviolet rays, infrared rays, and the like. Other examples of the information detected by sensor 12 include a shift of the centroid of the humanoid robot 1, detection of a material of a floor on which the humanoid robot 1 is installed, detection of an outside air temperature, detection of outside air humidity, detection of a vertical angle of a laterally oblique inclination of the floor, and detection of a moisture amount.

The sensor 12 performs these detections, for example, every nanosecond.

The information processing device 14 includes an information acquisition unit 140, a control unit 142, and an information accumulation unit 144. The information acquisition unit 140 functions as a calculation unit and a setting unit according to the disclosure.

The information acquisition unit 140 acquires information on an object detected by the sensor 12.

Using the information acquired by the information acquisition unit 140 and artificial intelligence (AI), the control unit 142 controls a pivoting operation and a vertical movement operation of the connecting portion 4, an operation of the arm portions 5 and 6, and the like.

For example, the control unit 142 executes the following processes.
(1) The connecting portion 4 is driven to tilt the upper body portion 2 forward or backward such that an object located on the floor can be picked up.
(2) The arm portions 5 and 6 and the gripping portion are driven to grip an object.
(3) The upper body portion 2 is driven up and down with respect to the leg portion 3 to match a height of a workbench in a production line.
(4) In order to prevent the humanoid robot 1 from falling, balance is taken.
(5) The driving of the wheels 7 and 8 is controlled such that the humanoid robot 1 can push a cart or the like.

Here, the humanoid robot 1 automatically measures an average walking speed of the human workers 52 who are in the same work environment using a group of sensors such as LiDARs and cameras. The humanoid robot 1 is moved at a speed equivalent to the measured walking speed.

As a result, all of the moving speeds of the human workers 52 and the humanoid robots 1 existing in the work environment can be synchronized (first-stage synchronized control).

The speaker 70 is installed on the floor 50 according to the first embodiment. The speaker 70 is controlled by the management control device 58 to play a rhythm (e.g., a marching order song such as "The Nutcracker") that can be heard by both the human workers 52 and the humanoid robots 1 at the same time.

By playing this rhythmic music on the floor 50, all of the human workers 52 and the humanoid robots 1 are synchronized to the same rhythm (second-stage synchronized control).

When the second-stage synchronized control is realized using the music (rhythm) emitted from the speaker 70, then, for example, if the music is played at a 1.2x speed to a walking speed A of the human workers 52 (A×1.2), the entire flow of movement can be synchronized to a 1.2 times faster rhythm with fewer accidents (e.g., contacts, collisions, etc.) (third-stage synchronized control).

That is, instead of a chaotic floor 50 on which different human workers 52 move at various moving speeds, a floor can be entirely unified to realize, for example, a floor on which work is performed at a 10x speed in perfect synchronization while playing a marching order song, which is safe and is also advantageous in that the cost can be decreased or reduced as much as 10 times the subscription fee.

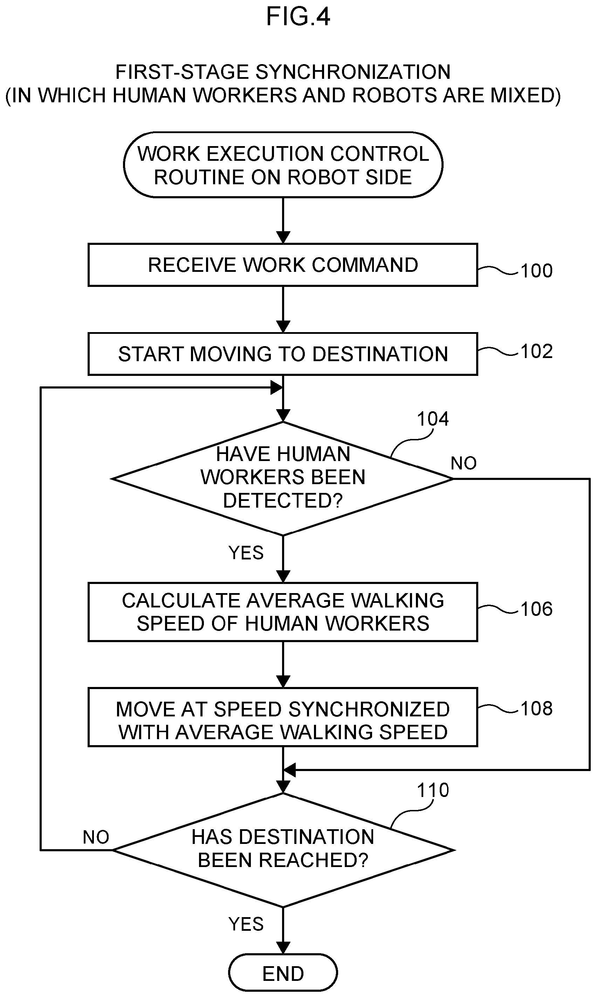

Hereinafter, the operation according to the first embodiment will be described with reference to flowcharts of Figs. 4 to 6.

Fig. 4 is a flowchart illustrating a work execution control routine on a humanoid robot side when human workers and humanoid robots are mixed, which is executed by the walking speed control system according to the first embodiment (first-stage synchronization).

In step 100, a work command is received, and thereafter the routine proceeds to step 102 to start moving to a destination.

In next step 104, it is determined whether human workers 52 have been detected during the movement. When it is determined that human workers 52 have been detected, the routine proceeds to step 106, in which walking speeds of the human workers 52 are calculated, and an average walking speed of the plurality of detected human workers 52 is calculated. Then, the routine proceeds to step 108.

In step 108, the humanoid robot 1 is controlled to move at a speed synchronized with the average walking speed, and the routine proceeds to step 110. When it is determined in step 104 that no human workers 52 have been detected, the routine proceeds to step 110.

In step 110, it is determined whether the destination has been reached. When it is determined that the destination has not been reached, the routine returns to step 104 and the above-described process is repeated. When it is determined in step 110 that the destination has been reached, the routine ends.

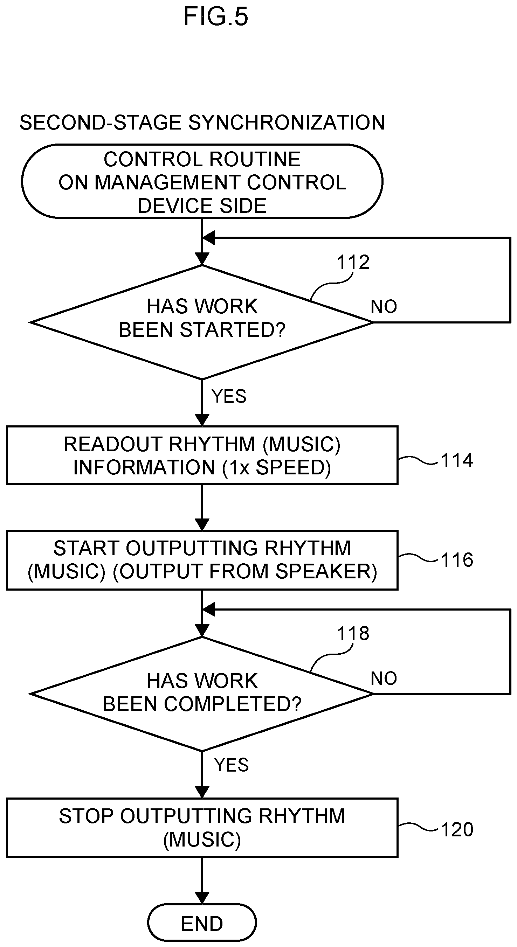

Fig. 5 is a flowchart illustrating a control routine on a management control device side when human workers and humanoid robots are mixed, which is executed by the walking speed control system according to the first embodiment (second-stage synchronization).

In step 112, it is determined whether work has been started, and this step 112 is repeated until it is determined that work has been started.

When it is determined in step 112 that work has been started, the routine proceeds to step 114, in which prestored rhythm (music) information (e.g., a piece of music such as "The Nutcracker") is read. Then, the routine proceeds to step 116. In step 116, the output of the read rhythm (music) is started. That is, the rhythm (music) is emitted from the speaker 70. At this time, the tempo is a normal speed (1x speed).

In next step 118, it is determined whether the work has been completed, and this step 118 is repeated until it is determined that the work has been completed. When it is determined in step 118 that the work has been completed, the routine proceeds to step 120, in which the output of the rhythm (music) is stopped. Then, the routine ends.

The human workers 52 begin to walk in accordance with this rhythm (music), and move in a constant rhythm. Meanwhile, the humanoid robots 1 move in synchronization with the movement of the human workers 52, the movement is generally in harmony, and the interference (contacts and collisions) is avoided more than that in a case in which the humanoid robots 1 and the human workers 52 move randomly.

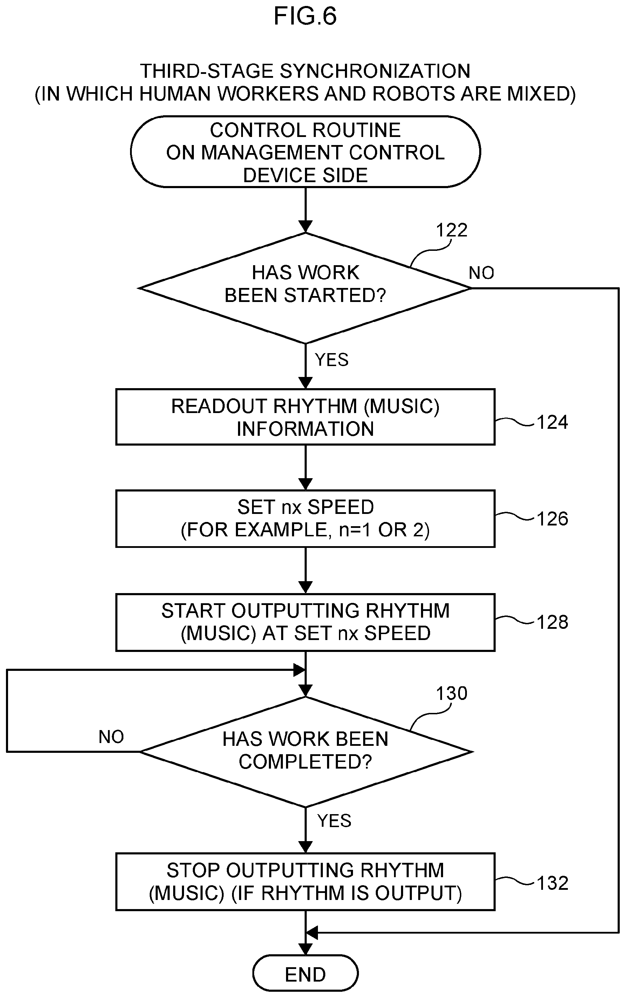

Fig. 6 is a flowchart illustrating a control routine on the management control device side when human workers and humanoid robots are mixed, which is executed by the walking speed control system according to the first embodiment (third-stage synchronization).

In step 122, it is determined whether work has been started, and this step 122 is repeated until it is determined that work has been started.

When it is determined in step 122 that work has been started, the routine proceeds to step 124, in which prestored rhythm (music) information (e.g., a piece of music such as "The Nutcracker") is read. Then, the routine proceeds to step 126. In step 126, the tempo at the time of outputting the rhythm (music) is set to a speed (e.g., nx speed = 1.2x) faster than the normal speed, and the routine proceeds to step 128.

In step 128, the output is started at the read rhythm (music) and tempo. That is, the rhythm (music) is emitted from the speaker 70 at a speed (e.g., nx speed = 1.2x) faster than the normal speed.

In next step 130, it is determined whether the work has been completed, and this step 130 is repeated until it is determined that the work has been completed. When it is determined in step 130 that the work has been completed, the routine proceeds to step 132, in which the output of the rhythm (music) is stopped. Then, the routine ends.

The human workers 52 begin to walk in accordance with this rhythm (music), and move in a constant rhythm. At this time, since the tempo is faster than the normal speed (n=1.2), the efficiency is improved accordingly. Meanwhile, the humanoid robots 1 move in synchronization with the movement of the human workers 52, the movement is generally in harmony, and the interference (contacts and collisions) is avoided more than that in a case in which the humanoid robots 1 and the human workers 52 move randomly.

### (Second Embodiment)

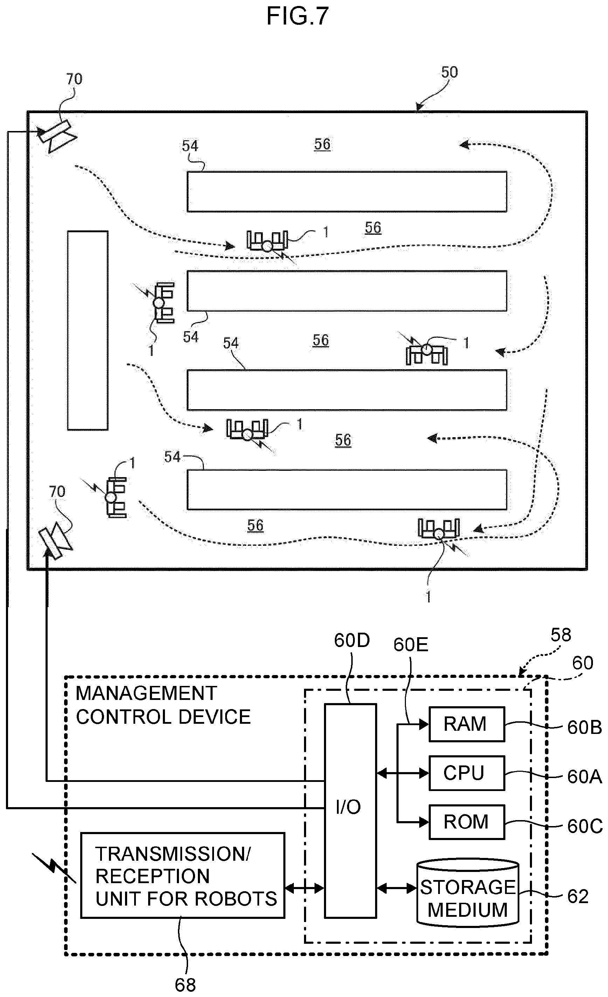

Fig. 7 is a plan view of a floor 50 in a warehouse where picking work is performed according to the second embodiment. Note that the same components as those in the first embodiment will be denoted by the same reference numerals, and the description of the configuration thereof will be omitted.

As illustrated in Fig. 7, in the second embodiment, picking staff members working on the floor 50 are humanoid robots 1, and the human workers 52 (see Fig. 1) described in the first embodiment do not exist.

In other words, it can be said that the passageways 56 in the work environment of the floor 50 are lanes dedicated to robots. In the passageways 56 that are lanes dedicated to robots, the flow speed can be further increased because all the picking staff members can be collectively controlled by the management control device 58 as long as they are within the lanes dedicated to robots.

That is, the management control device 58 grasps movement trajectories on the time axis for all the humanoid robots 1. Then, the humanoid robots 1 are perfectly synchronized by setting all the moving speeds of the humanoid robots 1 to an nx speed (n>1) to the moving speed of the human workers.

The n value can be set to, for example, 10 times or more to 20 times or more the moving speed of the human workers, and it is only required to consider an issue (e.g., balance when picked items are conveyed) other than mutual contacts and collisions.

Also, the humanoid robots 1 can be synchronized by using a control program without having to play a predetermined rhythm (music) from the speakers 70 on the floor 50. Meanwhile, by playing a predetermined rhythm (music) from the speaker 70 on the floor 50, robots that operate with different control programs or newly joining robots can hear (receive) the rhythm to be synchronized independently, without programming the joining robots to be synchronized with the management control device 58.

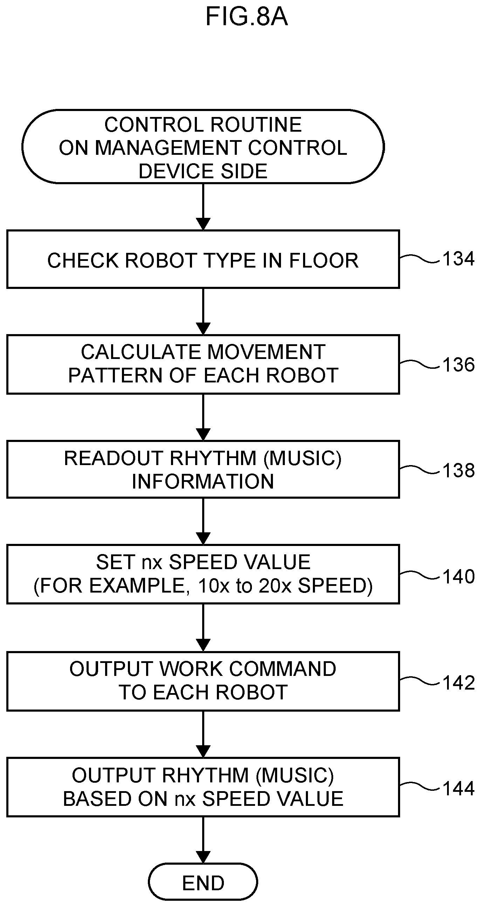

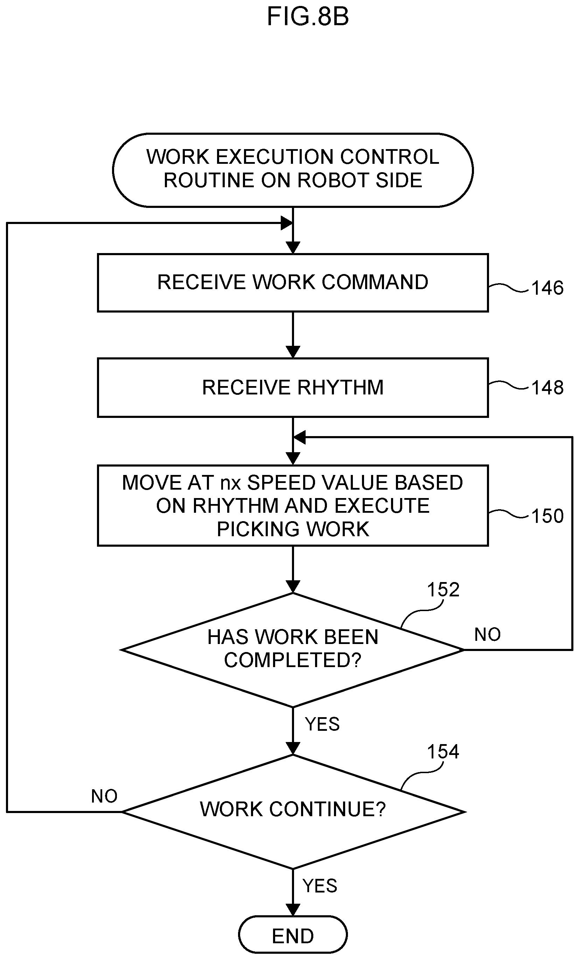

The operation according to the second embodiment will be described with reference to flowcharts of Figs. 8A and 8B.

Fig. 8A is a flowchart illustrating a work command control routine executed by the management control device 58 according to the second embodiment.

In step 134, the type of humanoid robots 1 in the floor 50 is checked, and thereafter the routine proceeds to step 136, in which a movement pattern of each of the humanoid robots 1 is calculated. Then, the routine proceeds to step 138.

In step 138, prestored rhythm (music) information (e.g., a piece of music such as "The Nutcracker") is read, and the routine proceeds to step 140.

In step 140, an nx speed value optimum for the calculated movement pattern is set as a tempo at which the output rhythm (music) is played. For example, if there are only robots, there is no problem even if the nx speed is n=10 to 20.

In next step 142, a work command is output to each robot, and thereafter the routine proceeds to step 144, in which rhythm (music) is output from the speaker 70 at a tempo based on the nx speed value. Then, this routine ends.

Fig. 8B is a flowchart illustrating a work execution control routine executed by the humanoid robot 1 according to the second embodiment.

When a work command is received in step 146, the routine proceeds to step 148, in which a rhythm (music) is received (for example, a sound is collected by a microphone or the like). Then, the routine proceeds to step 150, in which the robot moves at a tempo (nx speed value) based on the received rhythm and executes picking work.

In next step 152, it is determined whether the work has been completed. When it is determined that the work has not been completed, the routine returns to step 150, and when it is determined that the work has been completed, the routine proceeds to step 154.

In step 154, it is determined whether the work will continue. When it is determined that the work will continue, the routine returns to step 146, and the above-described process is repeated. When it is determined in step 154 that the work will continue, the routine ends.

### (Third Embodiment)

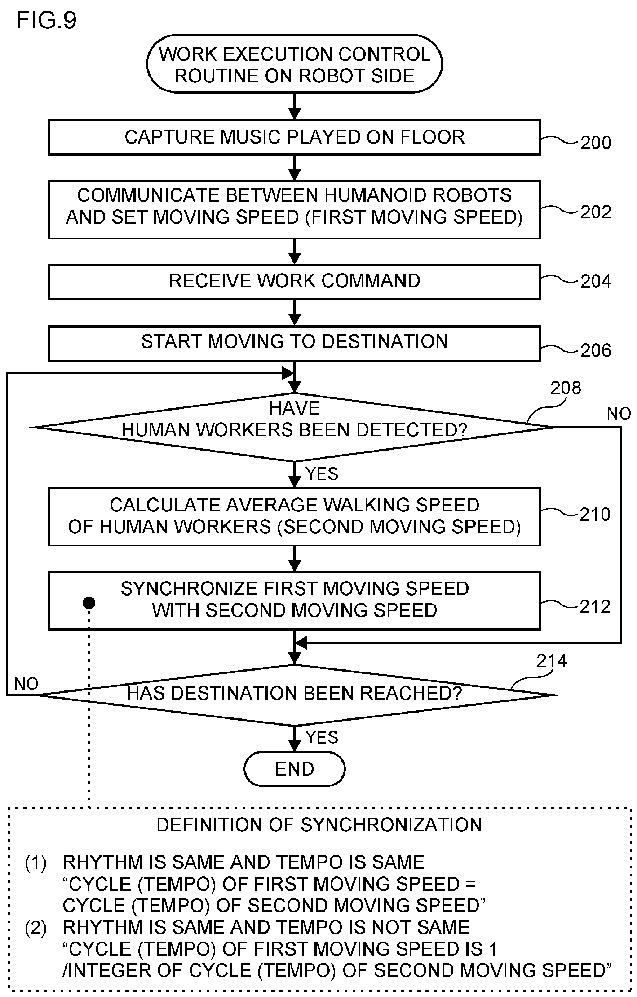

Hereinafter, the operation according to the third embodiment will be described with reference to flowcharts of Figs. 9 to 11. A configuration of a walking speed control system according to the third embodiment is similar to the configuration of the walking speed control system according to the first embodiment described above (see Fig. 1).

Fig. 9 is a flowchart illustrating a work execution control routine on a humanoid robot side, which is executed by the walking speed control system according to the third embodiment.

In step 200, music played from the speaker 70 on the floor 50 is captured, and thereafter the routine proceeds to step 202, in which the humanoid robots 1 communicate with each other and a moving speed (first moving speed) is set. Then, the routine proceeds to step 204.

In step 204, a work command is received, and thereafter the routine proceeds to step 206 to start moving to a destination.

In next step 208, it is determined whether human workers 52 have been detected during the movement. When it is determined that human workers 52 have been detected, the routine proceeds to step 210, in which walking speeds of the human workers 52 are calculated, and an average walking speed (second moving speed) of the plurality of detected human workers 52 is calculated. Then, the routine proceeds to step 212.

In step 212, the humanoid robot 1 is controlled to move at a speed synchronized with the average walking speed, and the routine proceeds to step 214. When it is determined in step 208 that no human workers 52 have been detected, the routine proceeds to step 214.

Here, the definition of synchronization is mainly classified into the following two types.

### (Synchronization 1) The rhythm is the same and the tempo is the same.

For example, it is assumed that the cycle (tempo) of the first moving speed is the same as the cycle (tempo) of the second moving speed.

### (Synchronization 2) The rhythm is the same and the tempo is not the same.

For example, it is assumed that the cycle (tempo) of the moving speed is 1/integer of the cycle (tempo) of the second moving speed.

In step 214, it is determined whether the destination has been reached. When it is determined that the destination has not been reached, the routine returns to step 208 and the above-described process is repeated. When it is determined in step 214 that the destination has been reached, the routine ends.

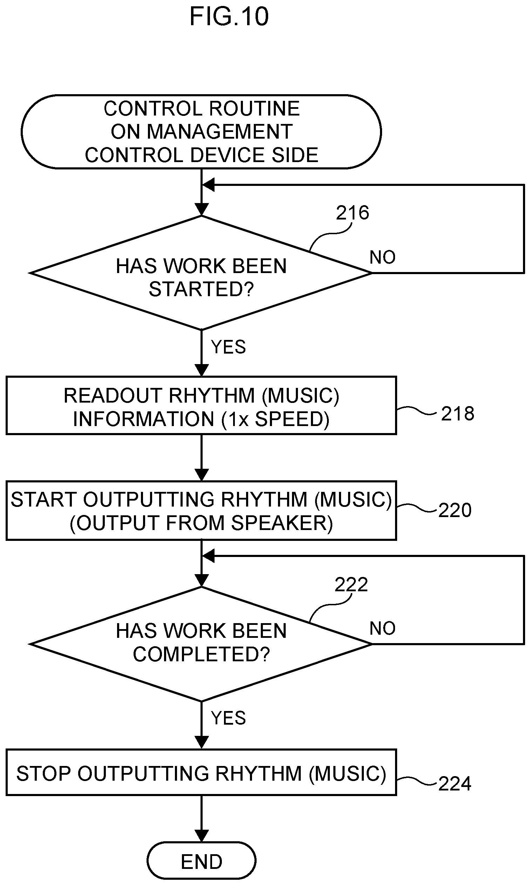

Fig. 10 is a flowchart illustrating a control routine on a management control device side, which is executed by the walking speed control system according to the third embodiment.

In step 216, it is determined whether work has been started, and this step 216 is repeated until it is determined that work has been started.

When it is determined in step 216 that work has been started, the routine proceeds to step 218, in which prestored tempo and rhythm (music) information (e.g., a piece of music such as "The Nutcracker") is read. Then, the routine proceeds to step 220. **In** step 220, the output of the read tempo and rhythm (music) is started. That is, the tempo and the rhythm (music) are emitted from the speaker 70. At this time, the tempo is a normal speed (1x speed).

**In** next step 222, it is determined whether the work has been completed, and this step 222 is repeated until it is determined that the work has been completed. When it is determined in step 222 that the work has been completed, the routine proceeds to step 224, in which the output of the tempo and the rhythm (music) is stopped. Then, the routine ends.

The human workers 52 begin to walk in accordance with the tempo and the rhythm (music), and move at a constant tempo and rhythm. Meanwhile, the humanoid robots 1 move in synchronization with the movement of the human workers 52, the movement is generally in harmony, and the interference (contacts and collisions) is avoided more than that in a case in which the humanoid robots 1 and the human workers 52 move randomly.

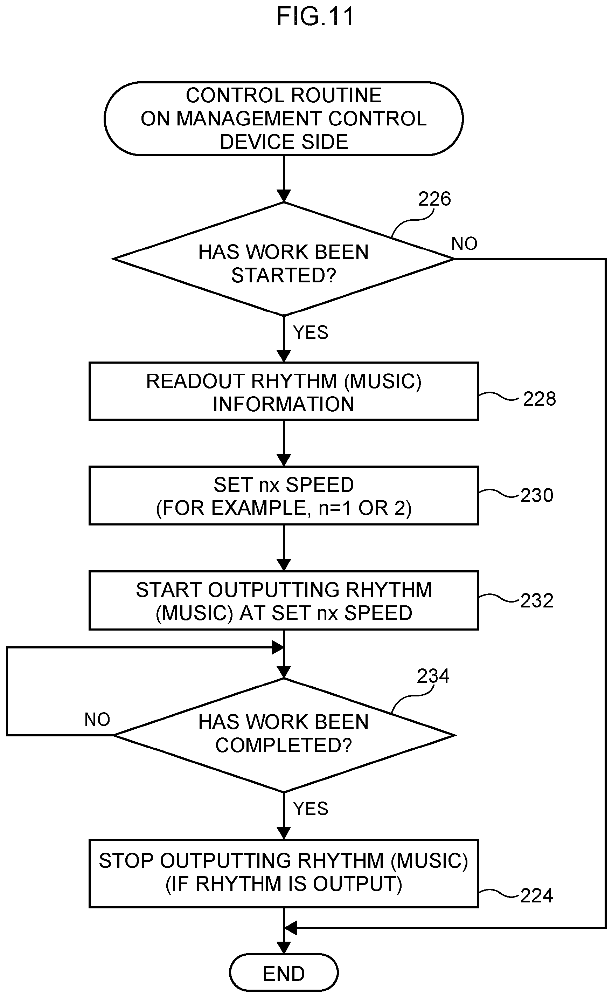

Fig. 11 is a flowchart illustrating a modification of the control routine on the management control device side, which is executed by the walking speed control system according to the third embodiment.

**In** step 226, it is determined whether work has been started, and this step 226 is repeated until it is determined that work has been started.

When it is determined in step 226 that work has been started, the routine proceeds to step 228, in which prestored tempo and rhythm (music) information (e.g., a piece of music such as "The Nutcracker") is read. Then, the routine proceeds to step 230. **In** step 230, the tempo at the time of outputting the tempo and rhythm (music) is set to a speed (e.g., nx speed = 1.2x) faster than the normal speed, and the routine proceeds to step 232.

**In** step 232, the output is started at the read tempo and rhythm (music) and the tempo. That is, the tempo and rhythm (music) is emitted from the speaker 70 at a speed (e.g., nx speed = 1.2x) faster than the normal speed.

**In** next step 234, it is determined whether the work has been completed, and this step 234 is repeated until it is determined that the work has been completed. When it is determined in step 234 that the work has been completed, the routine proceeds to step 236, in which the output of the tempo and rhythm (music) is stopped. Then, the routine ends.

The human workers 52 begin to walk in accordance with the tempo and the rhythm (music), and move at a constant tempo and rhythm. At this time, since the tempo is faster than the normal speed (n=1.2), the efficiency is improved accordingly. Meanwhile, the humanoid robots 1 move in synchronization with the movement of the human workers 52, the movement is generally in harmony, and the interference (contacts and collisions) is avoided more than that in a case in which the humanoid robots 1 and the human workers 52 move randomly.

### (Fourth Embodiment)

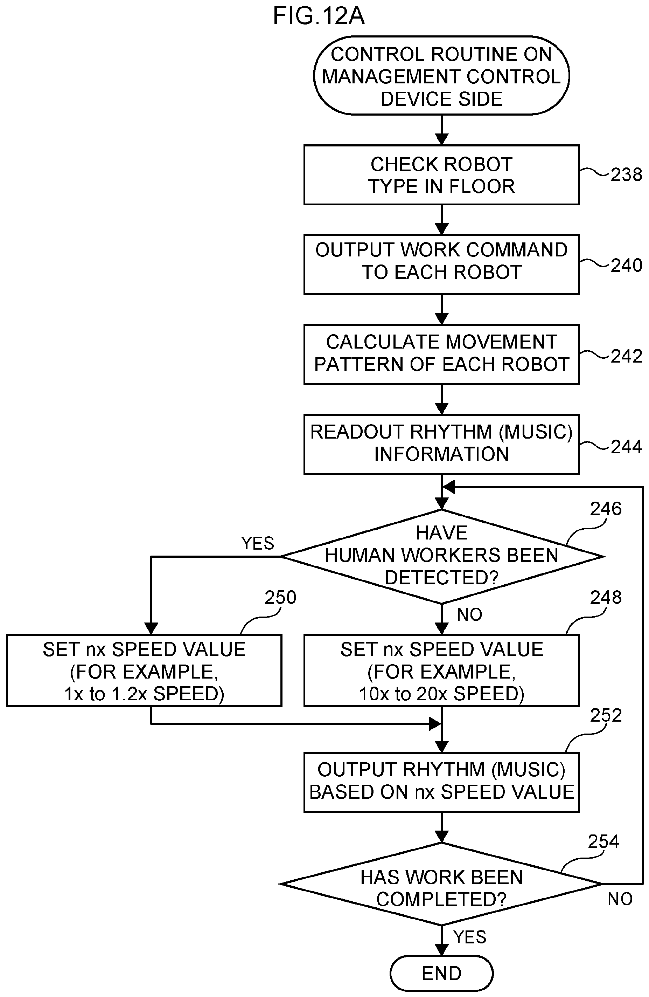

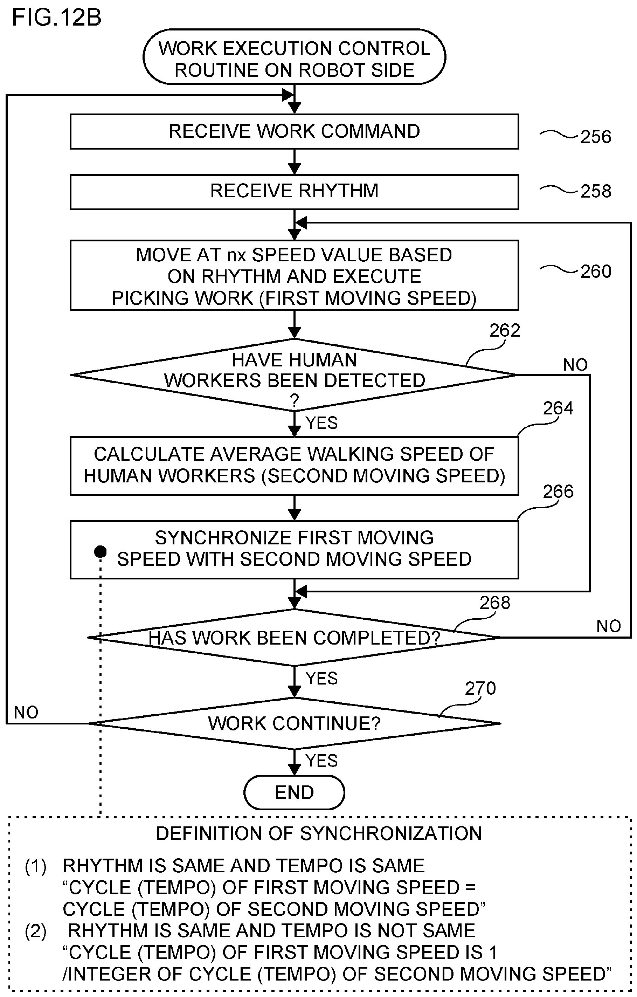

Hereinafter, the operation of the fourth embodiment will be described with reference to flowcharts of Figs. 12A and 12B. A configuration of a walking speed control system according to the fourth embodiment is similar to the configuration of the walking speed control system according to the second embodiment described above (see Fig. 7).

When human workers 52 (see Fig. 1) are added to the picking staff from the situation where the picking staff members are only humanoid robots 1, and the human workers 52 and the humanoid robots 1 are mixed, the human workers 52 are synchronized to music having a predetermined tempo and rhythm and played from the speaker 70, and synchronized with the humanoid robots 1 accordingly, so that the movement on the floor 50 is generally in harmony, and the interference (contacts and collisions) is avoided more than that in a case in which the humanoid robots 1 and the human workers 52 move randomly.

Fig. 12A is a flowchart illustrating a work command control routine executed by the management control device 58 according to the fourth embodiment.

In step 238, the type of humanoid robots 1 in the floor 50 is checked, and thereafter a work command is output to each robot in step 240. Then, the routine proceeds to step 242. In step 242, a movement pattern of each of the humanoid robots 1 is calculated, and the routine proceeds to step 244.

In step 244, prestored tempo and rhythm (music) information is read (e.g., a piece of music such as "The Nutcracker") is read, and the routine proceeds to step 246.

In step 246, it is determined whether human workers 52 have been detected. When it is determined that no human workers 52 have been detected, the routine proceeds to step 248, in which an nx speed value optimum for the calculated movement pattern is set as a tempo at which the output tempo and rhythm (music) is played. Then, the routine process proceeds to step 252. For example, if there are only robots, there is no problem even if the nx speed is n=10 to 20.

In addition, when it is determined in step 246 that human workers 52 have been detected, the routine proceeds to step 250, in which an nx speed value optimum for movement is set as a tempo at which the output tempo and rhythm (music) is played for the human workers 52. Then, the routine proceeds to step 252. For example, when the human workers 52 are mainly used, it is preferable that the nx speed is n=1 to 1.2 (with reference to Figs. 10 and 11).

In step 252, the tempo and rhythm (music) is output from the speaker 70 at a tempo based on the nx speed value, and the routine proceeds to step 254.

In step 254, it is determined whether the work has been completed. When it is determined whether the work has not been completed, the routine returns to step 246, and the above-described process is repeated. When it is determined in step 254 that the work has been completed, the routine ends.

Fig. 12B is a flowchart illustrating a work execution control routine executed by the humanoid robot 1 according to the fourth embodiment.

When a work command is received in step 256, the routine proceeds to step 258, in which a tempo and the rhythm (music) is received (for example, a sound is collected by a sound collection device such as a microphone). Then, the routine proceeds to step 260, in which the robot moves at a tempo (nx speed value) based on the received music and executes picking work.

In next step 262, it is determined whether human workers 52 have been detected. When it is determined that human workers 52 have been detected, the routine proceeds to step 264, in which walking speeds of the human workers 52 are calculated, and an average walking speed (second moving speed) of the plurality of detected human workers 52 is calculated. Then, the routine proceeds to step 266.

In step 266, the humanoid robot 1 is controlled to move at a speed synchronized with the average walking speed, and the routine proceeds to step 268. When it is determined in step 262 that no human workers 52 have been detected, the routine proceeds to step 268.

Here, the definition of synchronization is mainly classified into the following two types.

### (Synchronization 1) The rhythm is the same and the tempo is the same.

For example, it is assumed that the cycle (tempo) of the first moving speed is the same as the cycle (tempo) of the second moving speed.

### (Synchronization 2) The rhythm is the same and the tempo is not the same.

For example, it is assumed that the cycle (tempo) of the moving speed is 1/integer of the cycle (tempo) of the second moving speed.

In step 268, it is determined whether the work has been completed. When it is determined that the work has not been completed, the routine returns to step 260, and when it is determined that the work has been completed, the routine proceeds to step 270.

In step 270, it is determined whether the work will continue. When it is determined that the work will not continue, the routine returns to step 256, and the above-described process is repeated. When it is determined in step 270 that the work will continue, the routine ends.

### (Fifth Embodiment)

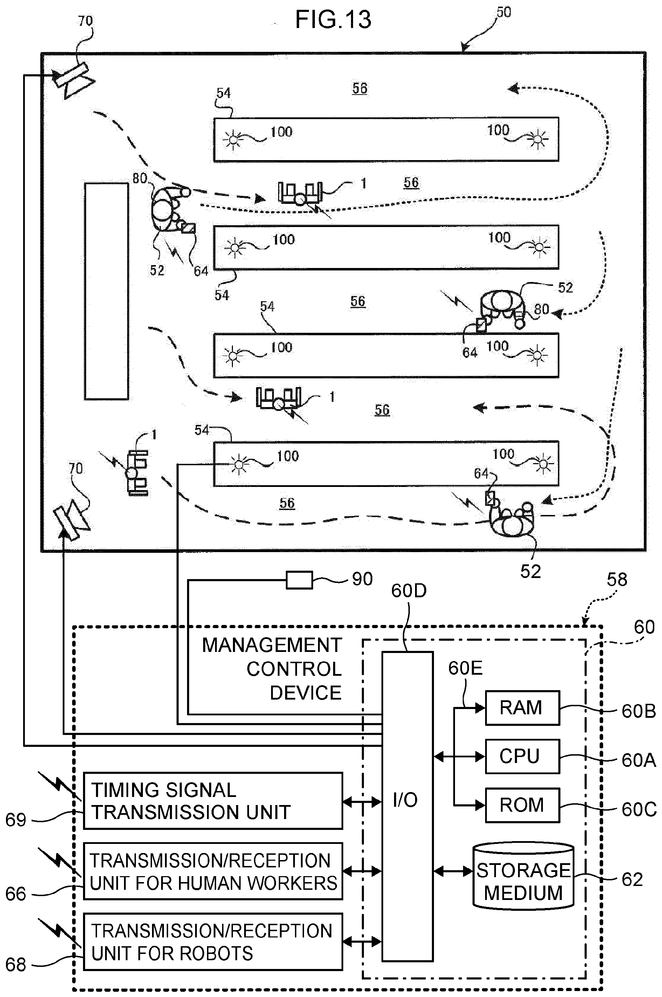

Fig. 13 is a plan view of a floor 50 in a warehouse where picking work is performed according to the fifth embodiment.

The present embodiment is different from the first embodiment illustrated in Fig. 1 in that a plurality of LED lights 100 are arranged above the shelves 54. In addition, the present embodiment is different from the first embodiment illustrated in Fig. 1 in that some of the human workers 52 wear smart watches 80 on their arms. Furthermore, the present embodiment is different from the first embodiment in that the management control device 58 includes a timing signal transmission unit 69. The management control device 58 in the present embodiment is connected to a camera 90 via the I/O 60D. It is illustrated in Fig. 13 that the camera 90 is disposed at a position where the side view of the floor 50 in the warehouse where picking work is performed is captured, but is actually installed to be able to capture the entire view of the floor 50.

Furthermore, the timing signal transmission unit 69 transmits a timing signal to the smart watch 80 worn by the human worker 52, for example, via a wireless communication line such as Wi-Fi (registered trademark) or Bluetooth (registered trademark). This timing signal is a signal indicating a tempo or timing synchronized with the tempo of the music being output from the speaker 70. Then, the smart watch 80 vibrates based on the timing signal transmitted from the timing signal transmission unit 69 and transmits the vibration to the human worker 52 to provide the timing.

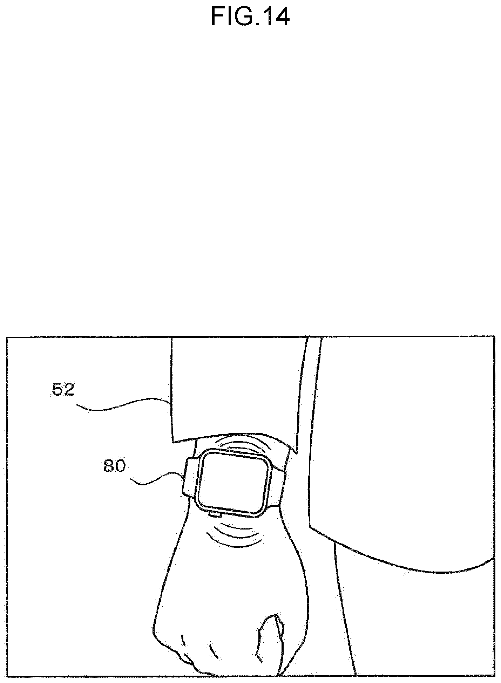

Fig. 14 illustrates a view of the human worker 52 wearing the smart watch 80. Referring to Fig. 14, a view in which the smart watch 80 worn on the arm of the human worker 52 vibrates is illustrated. The smart watch 80 vibrates in synchronization with a timing signal transmitted thereto, thereby vibrating at a timing synchronized with the tempo of the music being output from the speaker 70. Therefore, even in a case in which the human worker 52 wearing the smart watch 80 has poor hearing ability and is not able to hear the music being output from the speaker 70, the human worker 52 can make motions synchronized to the vibrations of the smart watch 80, thereby making motions synchronized to the music being output from the speaker 70.

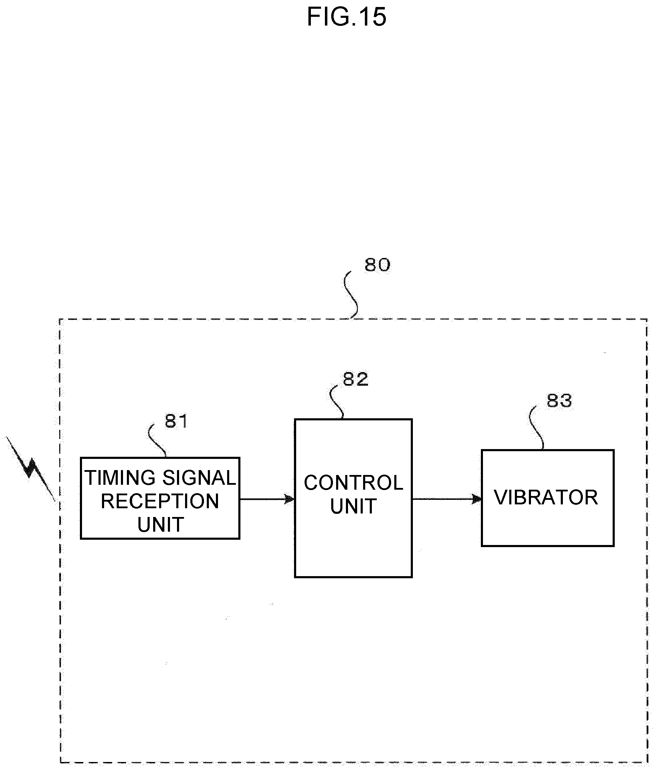

A detailed configuration of the smart watch 80 will be described with reference to Fig. 15. As illustrated in Fig. 15, the smart watch 80 includes a timing signal reception unit 81, a control unit 82, and a vibrator 83.

The timing signal reception unit 81 receives a timing signal transmitted from the timing signal transmission unit 69. The control unit 82 causes the vibrator 83 to vibrate based on a timing indicated by the timing signal received by the timing signal reception unit 81.

In the first embodiment, the management control device 58 outputs music having a constant rhythm at a preset tempo from the speaker 70 to synchronize the motions of the plurality of human workers 52 to the same rhythm. However, in a case in which some human workers 52 among the plurality of human workers 52 have poorer hearing ability than the other human workers 52, they are not able to hear music output from the speaker 70, and not able to make motions synchronized with the tempo of the music.

Therefore, in the present embodiment, in addition to providing a tempo (timing) using music to the human workers 52, a visual tempo or timing is provided using the LED lights 100. Furthermore, in the present embodiment, a tactile tempo or timing is provided using the smart watches 80 worn on the arms by the human workers 52.

In the present embodiment, the LED lights 100 and the smart watches 80 function as a timing providing unit that provides a tempo or timing to the human workers 52 by blinking or vibrating at the same tempo as the tempo of the music output from the speaker 70.

Specifically, the LED lights 100 function as a light emitting device that provides a visual timing to the human workers 52 by blinking at the same tempo as the tempo of the music output from the speaker 70.

In addition, the smart watches 80 function as a vibration device that provides a tactile timing to the human workers 52 by vibrating at the same tempo as the tempo of the music output from the speaker 70.

Note that, by using a device capable of providing some display to the human worker 52 like a smart glass, it is also possible to provide a visual timing to the human worker 52 wearing the smart glass. Furthermore, by using a device such as a smartphone having a certain vibration function even though the device is not a smart watch 80, it is also possible to provide a tactile tempo to the human worker 52.

Furthermore, it may be considered that some of the plurality of human workers 52 have no problems with their hearing ability, while some have poorer hearing ability than the other human workers 52. Therefore, it is not necessary to provide a tempo or timing to all the human workers 52 using a means other than music. For this reason, the management control device 58 may detect the hearing ability of each of the plurality of human workers 52 and provide a timing using the smart watch 80 only to a human worker 52 whose detected hearing ability is equal to or less than a preset value. The management control device 58 functions as an operation control unit for performing such control.

Specifically, the camera 90 captures a moving image including a plurality of human workers 52 working on the floor 50. Then, the management control device 58 functioning as the operation control unit sequentially outputs sounds calling the name of the human worker 52 from the speaker 70 in a stepwise increasing volume. Then, referring to the moving image captured by the camera 90, the management control device 58 detects the hearing ability of the human worker 52 according to which output sound the human worker 52 whose name has been called reacts. That is, in a case in which the name of a certain human worker 52 is called and the human worker 52 reacts, for example, by turning around, it is determined that the human worker 52 has heard the sound output at that stage.

Then, by transmitting a timing signal from the timing signal transmission unit 69 only to the smart watch 80 worn by the human worker 52 determined to have poor hearing ability, it is possible to vibrate only the smart watch 80 of the human worker 52 having poor hearing ability.

As described above, according to the present embodiment, in a case in which music is output from the speaker 70 and motions of the human workers 52 are synchronized to the tempo of the music, it is possible to realize a work environment in which the motions of the plurality of human workers 52 working on the floor 50 are synchronized, even if there is a person whose hearing ability is poorer than those of the other human workers 52 among the plurality of human workers 52.

### (Embodiment of Information Processing Device 14 of Humanoid Robot 1)

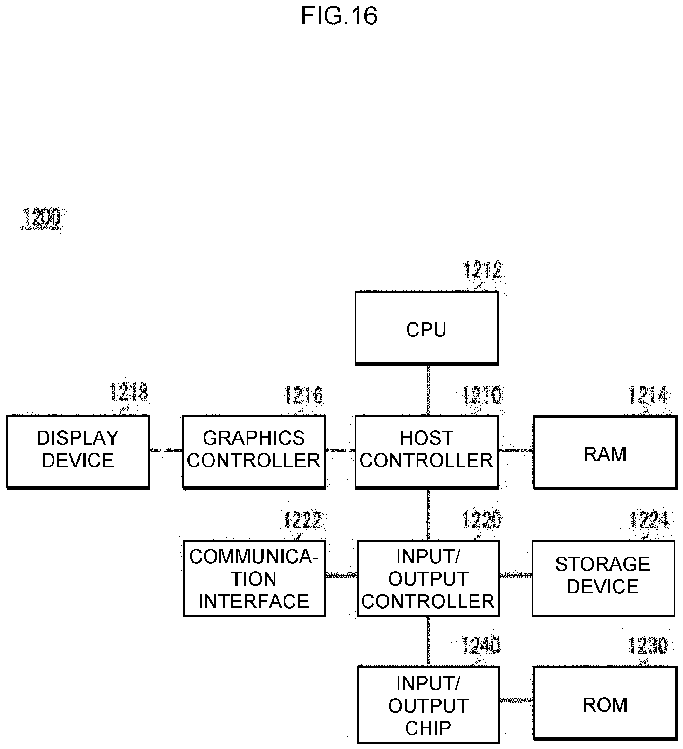

Fig. 16 schematically illustrates an example of a hardware configuration of a computer 1200 that functions as the information processing device 14. Programs installed in the computer 1200 can cause the computer 1200 to function as one or more "units" of the device according to the first embodiment, or cause the computer 1200 to execute operations associated with the device according to the present embodiment or one or more "units" of the device according to the present embodiment, and/or cause the computer 1200 to execute a process according to the present embodiment or stages of the process. Such programs may be executed by a CPU 1212 to cause the computer 1200 to execute specific operations associated with some or all of the blocks in the flowcharts and block diagrams illustrated herein.

The computer 1200 according to the present embodiment includes a CPU 1212, a RAM 1214, and a graphics controller 1216, which are connected to each other by a host controller 1210. The computer 1200 also includes a communication interface 1222, a storage device 1224, and an input/output unit such as a DVD drive or an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 in a frame buffer or the like provided in the RAM 1214 or in the RAM 1214 itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from the DVD-ROM or the like and provides the programs or data to the storage device 1224. The IC card drive reads programs and data from the IC card and/or writes programs and data to the IC card.

The ROM 1230 stores therein a boot program or the like executed by the computer 1200 when activated, and/or programs dependent on the hardware of the computer 1200. The input/output chip 1240 may also connect various input/output units to the input/output controller 1220 via a USB port, a parallel port, a serial port, a keyboard port, a mouse port, and the like.

Programs are provided by a computer-readable storage medium such as a DVD-ROM or an IC card. The programs are read from the computer-readable storage medium, installed in the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the operation or processing of information according to the use of the computer 1200.

For example, when communication is performed between the computer 1200 and an external device, the CPU 1212 may execute a communication program loaded into the RAM 1214 and instruct the communication interface 1222 to perform communication processing based on the processing described in the communication program. Under the control of the CPU 1212, the communication interface 1222 reads transmission data stored in a transmission buffer area provided in the storage medium such as the RAM 1214, the storage device 1224, the DVD-ROM, or the IC card, and transmits the read transmission data to the network, or writes reception data received from the network to a reception buffer area or the like provided on the storage medium.

In addition, the RAM 1214 may read all or necessary portions of files or databases stored in the external storage medium such as the storage device 1224, the DVD drive (DVD-ROM), or the IC card, and the CPU 1212 may execute various types of processing on data on the RAM 1214. Next, the CPU 1212 may write back the processed data to the external storage medium.

Various types of information such as various types of programs, data, tables, and databases may be stored in the storage medium and subjected to information processing. The CPU 1212 may execute various types of processing on the data read from the RAM 1214, the various types of processing including various types of operations, information processing, conditional determination, conditional branching, unconditional branching, information search/replacement, and the like, which are described throughout the disclosure and specified by an instruction sequence of a program, and writes back the results to the RAM 1214. In addition, the CPU 1212 may search for information in files, databases, or the like in the storage medium. For example, in a case in which a plurality of entries, each having an attribute value of a first attribute associated with an attribute value of a second attribute, are stored in the storage medium, the CPU 1212 may search for an entry of which the attribute value of the first attribute matches the specified condition from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 1200 or near the computer 1200. Furthermore, a storage medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which operations are performed or "units" of a device that serves to perform operations. Specific stages and "units" may be implemented by dedicated circuits, programmable circuits provided with computer-readable instructions stored on the computer-readable storage medium, and/or processors provided with computer-readable instructions stored on the computer-readable storage medium. The dedicated circuits may include digital and/or analog hardware circuits, and may include integrated circuits (ICs) and/or discrete circuits. The programmable circuits may include reconfigurable hardware circuits including a logical AND, a logical OR, a logical XOR, a logical NAND, a logical NOR, and other logical operations, flip-flops, registers, and memory elements, such as field programmable gate arrays (FPGAs) and programmable logic arrays (PLAs).

The computer-readable storage medium may include any type of tangible device capable of storing instructions to be executed by a suitable device. As a result, the computer-readable storage medium having instructions stored thereon includes a product having instructions that may be executed to create a means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, state-setting data, or either source code or object code written in any combination of one or more programming languages including object-oriented programming languages such as Smalltalk (registered trademark), JAVA (registered trademark), and C++, and conventional procedural programming languages such as a "C" programming language or similar programming languages.

The computer-readable instructions may be provided for a processor or a programmable circuit of a general purpose computer, a special purpose computer, or another programmable data processing device, either locally or through a local area network (LAN) or a wide area network (WAN) such as the Internet, such that the processor or programmable circuit of the general purpose computer, the special purpose computer, or another programmable data processing device executes the computer-readable instructions to create a means for performing the operations specified in the flowcharts or block diagrams. Examples of the processor include a computer processor, a processing unit, a microprocessor, a digital signal processor, a controller, a microcontroller, and the like.

In the present embodiment (the first to fifth embodiments), the information processing device 14 of the humanoid robot 1 functions as each unit of the disclosure, but the management control device 58 may perform the same functions.

### (Outline of Present Disclosure)

### • "Work environment in which human workers and humanoid robots are mixed" according to the first, third, and fifth embodiments

A humanoid robot, which is an example of a smart robot, automatically measures an average of walking speeds of human workers in the same work environment using a group of sensors such as LiDARs and cameras, and moves humanoid robots at a speed equivalent to the measured walking speed.

As a result, all of the moving speeds of the human workers and the humanoid robots existing in the work environment can be synchronized.

A more perfect moving speed would be if both the workers (human workers) and the participating humanoid robots moved at exactly the same speed or at almost the same speed, making it possible to operate the synchronized movement across the entire floor in a safer and more efficient way.

In order to realize a perfect moving speed, by playing a rhythm that can be heard by both the workers (human workers) and the humanoid robots at the same time (e.g., a marching order song such as "The Nutcracker") under the work environment, all of the workers (human workers) and the humanoid robots can be synchronized to the same rhythm.

If the synchronization to the rhythm is realized, further, for example, if the music is played at a 1.2x speed 1.2 to the walking speed A (A×1.2), the entire flow of movement can be synchronized to a 1.2 times faster rhythm with fewer accidents (e.g., contacts, collisions, etc.).

That is, instead of a chaotic floor on which different people move at various speeds, a floor can be entirely unified to realize, for example, a floor on which work is performed at a 10x speed in perfect synchronization while playing a marching order song, which is safe and is also advantageous in that the cost can be decreased or reduced as much as 10 times the subscription fee.

### • "Work environment in which there are only humanoid robots" according to the second and fourth embodiments

On the other hand, if a robot-dedicated lane can be provided in the work environment, the flow speed can be further increased as long as robots are within the robot-dedicated lane.

In order to make the work environment (e.g., the entire floor) safest and most speed-efficient, by perfectly synchronizing all of the moving speeds of the robots to an nx speed while the number of workers (human workers) working on the floor is set to zero, the movement flow can be most efficient. For example, it is also possible to set the robots to run at a speed 10 times or more to 20 times or more the moving speed of the worker (human worker).

It can also be used during sales as a merit talk for sales to introduce a unified robot floor as soon as possible.

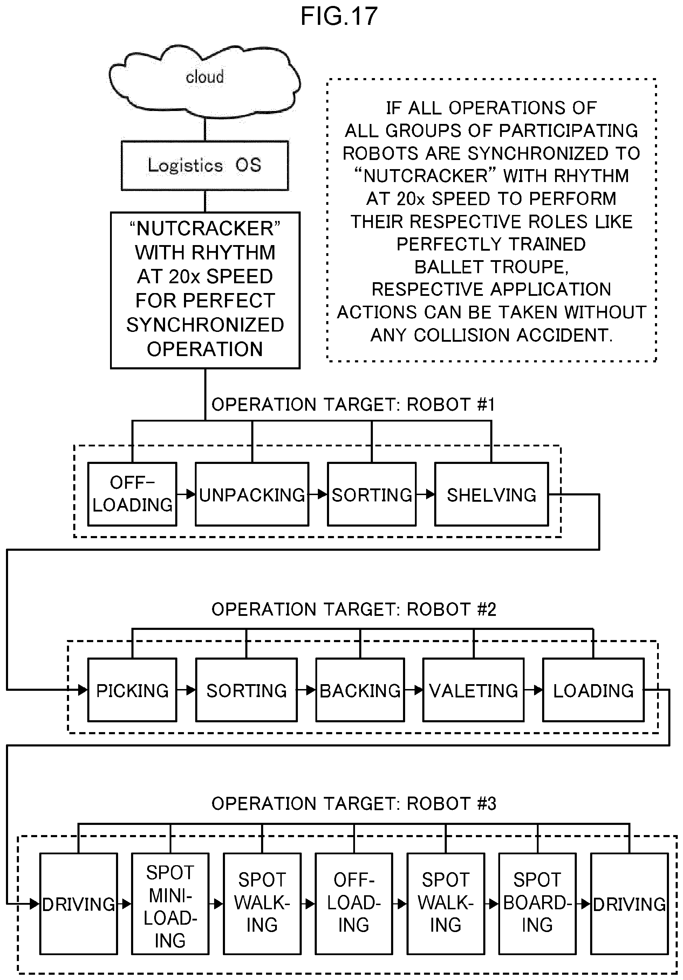

Note that Fig. 17 is an example according to the second or fourth embodiment, and is a flowchart for synchronizing a plurality of application actions.

For example, a case in which 20x speed is set as a synchronization rhythm for the entire floor will be considered.

In this case, a running motion and an arm motion can be made at a 20x speed, and a finger motion can be made at a 100x speed. Furthermore, eye and head motions can be made 1 million times faster.

By playing music ("The Nutcracker" with a rhythm at a 20x speed) for perfect synchronization on a floor, Total Logistics OS and its application are enabled, making it possible to perform a completely unmanned warehouse operation without collisions or accidents.

While the disclosure has been described above using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first", "next", and the like for convenience, this does not mean that it is essential to perform the operation flow in this order.

The disclosure of Japanese Patent Application No. 2022-166242 filed on October 17, 2022, Japanese Patent Application No. 2022-176626 filed on November 2, 2022, and Japanese Patent Application No. 2022-184307 filed on November 17, 2022 are incorporated herein by reference in their entirety. All the documents, patent applications, and technical standards described in this specification are incorporated herein by reference to the same extent as if each document, patent application, and technical standard were specifically and individually indicated to be incorporated by reference.

## Claims

1. A walking speed control system in a case in which work staff, in which human workers and robots are mixed, moves within a predetermined area to perform work, the walking speed control system comprising:
a detection unit that detects the human workers;
a calculation unit that calculates moving speeds of a plurality of the human workers detected by the detection unit; and
a setting unit that sets a moving speed in synchronization with an average value of the moving speeds calculated by the calculation unit.

2. The walking speed control system according to claim 1, further comprising:
a speaker installed in the predetermined area; and
a control unit that outputs music from the speaker based on music information played with a predetermined rhythm.

3. The walking speed control system according to claim 2, wherein the control unit outputs the music based on the music information at a speed faster than a normal speed.

4. A walking speed control system that controls moving speeds of at least a plurality of robots in a case in which the plurality of robots move in a predetermined area to perform work, the walking speed control system comprising:
a synchronization control unit that causes each of the plurality of robots to move at a first moving speed synchronized to a tempo and a rhythm of music information collected by a sound collection device that is included in each of the plurality of robots and that collects the music information; and
an adjustment unit that, in a case in which a human worker that performs the work is detected in the predetermined area, calculates a second moving speed of the human worker who moves in synchronization with the music information, and adjusts the first moving speed for the synchronization control unit to synchronize the plurality of robots based on the calculated second moving speed.

5. The walking speed control system according to claim 4, wherein the music information is output at a tempo faster than a normal tempo set for a basic piece of the music information.

6. The walking speed control system according to claim 4, wherein the synchronization control unit adjusts a cycle of the first moving speed for the plurality of robots to move synchronously to be 1/integer of a cycle of the second moving speed.

7. A walking speed control system in a case in which work staff, in which human workers and robots are mixed, moves within a predetermined area to perform work, the walking speed control system comprising:
at least one robot including a detection unit that detects the human workers, a calculation unit that calculates an average value of moving speeds of a plurality of the human workers detected by the detection unit, and a setting unit that sets a moving speed for the at least one robot to move in synchronization with the average value of the moving speeds calculated by the calculation unit;
a speaker installed in the predetermined area;
a music control unit that outputs music having a constant rhythm at a preset tempo from the speaker; and
a timing providing unit that provides a timing to the human workers by blinking or vibrating at the same tempo as the tempo of the music output from the speaker.

8. The walking speed control system according to claim 7, wherein the timing providing unit comprises a light emitting device that provides a visual timing to the human workers by blinking at the same tempo as the tempo of the music output from the speaker.

9. The walking speed control system according to claim 7, wherein the timing providing unit comprises a vibration device that provides a tactile timing to the human workers by vibrating at the same tempo as the tempo of the music output from the speaker.

10. The walking speed control system according to claim 7, further comprising an operation control unit that detects a hearing ability of each of the human workers and provides the timing from the timing providing unit only to a human worker whose detected hearing ability is equal to or less than a preset value.

11. The walking speed control system according to claim 10, further comprising an image capturing unit that captures an image including the plurality of human workers,
wherein the operation control unit sequentially outputs sounds calling a name of each of the human workers from the speaker in a stepwise increasing volume, and detects the hearing ability of the human worker depending on which output sound the human worker whose name has been called reacts.

12. A program for causing a computer to function as the detection unit, the calculation unit, and the setting unit of the walking speed control system according to any one of claims 1 to 3.

13. A program for causing a computer to function as the synchronization control unit and the adjustment unit of the walking speed control system according to any one of claims 4 to 6.

14. A program for causing a computer to function as the detection unit, the calculation unit, the setting unit, the music control unit, and the timing providing unit of the walking speed control system according to any one of claims 7 to 11.
